# EUROPEAN PATENT SPECIFICATION

(11) **EP 2 024 200 B1**
(45) Date of publication and mention of the grant of the patent: **19.08.2009**
(21) Application number: 07790134.6
(22) Date of filing: 06.06.2007
(51) Int. Cl.: B60K 37/06, B62D 1/04, B60K 26/02

(54) **MANUAL CONTROL DEVICE FOR TRANSMITTING CAR DRIVING CONTROLS**
HANDSTEUERUNGSVORRICHTUNG ZUR ÜBERTRAGUNG VON AUTOANTRIEBSSTEUERUNGEN
DISPOSITIF DE COMMANDE MANUEL POUR TRANSMETTRE DES COMMANDES DE CONDUITE DE VOITURE

(30) Priority: 07.06.2006 IT RM20060297
(43) Date of publication of application: 18.02.2009
(73) Proprietor: Domeneghini, Fabio, 30020 Marcon (VE) (IT); Venturini, Stefano, 00166 Roma (IT)
(72) Inventor: Domeneghini, Fabio, 30020 Marcon (VE) (IT); Venturini, Stefano, 00166 Roma (IT)
(74) Representative: Iannone, Carlo Luigi
(86) International application number: PCT/IT2007/000402
(87) International publication number: WO 2007/141821

(56) References cited:
- EP-A- 1 400 429
- WO-A-92/06860
- DE-U1- 20 020 227
- US-A1- 2005 189 159

## Description

The present invention concerns a manual control device for transmitting car driving controls, such as acceleration and braking control of the type defined in the preamble of claim 1 and known for example from the document EP1 400429 A1*.*

More specifically, the invention concerns a device of the above kind that can be applied on each type of vehicle steering wheel, and permitting safely transmitting set controls, such as acceleration and braking.

As it is well known, different solutions have been realised in the last decades in order to permit driving to disabled persons. Said persons, following an examination by the Authorities, are qualified to drive, provided that car is equipped with driving devices homologated by the same Authorities.

Among the above-mentioned devices, there are some known since many years providing a wheel coaxially above or under the steering wheel, with respect to the driver, mechanically or electronically transmitting the set control.

Mainly, this kind of solution is employed for transmission of the acceleration control, although it can be employed as well for transmitting a braking control or another kind of control.

For example, Guidosimplex has developed, realised and patented since the sixties, many technical specific solutions providing the use of the wheel for transmitting controls.

These solution are widely used both in the National and International market; however they provide the use of the additional wheel on the steering wheel and require the driver carrying out a kind of action (pushing or pulling the wheel) not completely natural while driving, and in any case an action that must be added to the standard steering wheel control action.

The Applicants have developed during the years a huge know-how in the specific field, and just on the basis of this know-how have always tried to find new technical solutions permitting to the disabled driver an always more safe an easy driving.

Strip shaped sensor have been recently developed, sensing movement, for example movement of a digital pulp.

In this technical framework, Applicants have realised a solution permitting exploiting intrinsic features of this kind of sensor in order to transmit in a very easy, simple, practical and not intrusive a control, such as acceleration.

It is therefore specific object of the present invention a manual control device for transmitting car driving controls, such as acceleration and braking control, comprising a sensor element having a substantially elongated shape, and provided on the steering wheel, and a slidable element or carriage, slidably provided on said sensor element, said slidable element or carriage providing at least a groove for positioning driver digital pulp in such a position to interact with said sensor element, said device further comprising encoding means for signal received from said sensor element and means for transferring the signal to the element to which control must be transmitted.

Preferably, according to the invention, said slidable element or carriage provides return means bringing it to the rest position.

Particularly, said return means are comprised of a spring.

Always according to the invention, said device has a rectilinear shape.

Still according to the invention, said device has a curvilinear shape.

Furthermore, according to the invention, said device is provided on the upper part and/or on the rear part of the steering wheel.

Always according to the invention, it can be provided a plurality of devices on the same steering wheel.

Still, according to the invention, said encoding means for the signal received from said sensor element are comprised of a central unit.

The present invention will be now described, for illustrative but not limitative purposes, according to its preferred embodiments, with particular reference to the figures of the enclosed drawings, wherein:
figure 1 is a perspective view of a first embodiment of the device according to the invention;
figure 2 is a front or rear view of the device according to figure 1 ;
figure 3 is a plan view of device of figure 1;
figure 4 is a section view taken along line IV-IV of figure 3;
figure 5 is a perspective view of a steering wheel with the device according to figures 1-4;
figure 6 is a perspective view of a second embodiment of the device according to the invention;
figure 7 is a front or rear view of the device according to figure 6;
figure 8 is a lateral view of device of figure 6; and
figure 9 is a perspective view of a steering wheel with the device according to the figures 6 - 8.

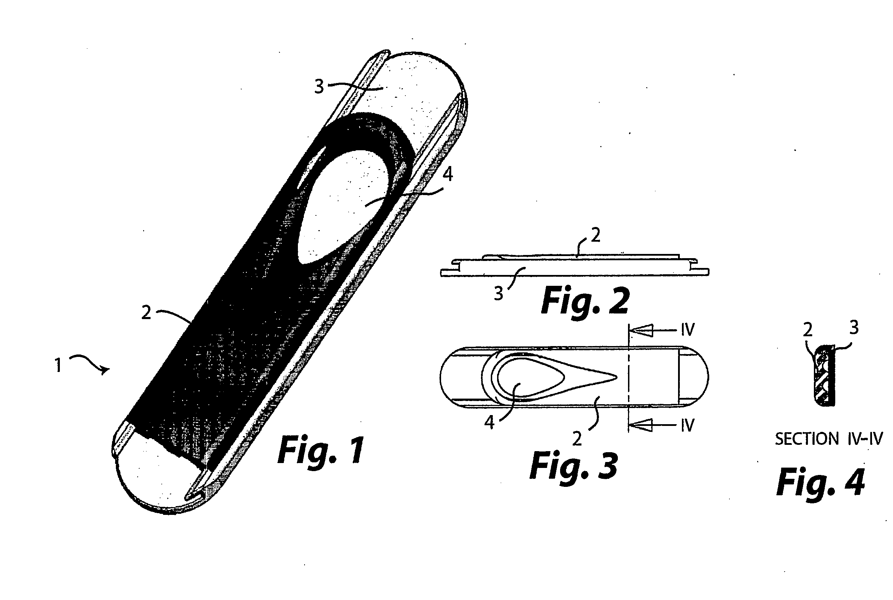

Observing first figures 1 - 5 of the enclosed drawings, it is shown a manual control device 1 for transmitting driving control, particularly acceleration, comprising a slidable carriage 2 and a sensor 3, on which said carriage 2 slides.

Said sensor 3 is a strip shaped sensor, e.g. sensitive to the passage of the user digital pulp.

A groove 4 is provided on said carriage 2, in order to fit said digital pulp.

Simply moving a finger digital pulp, acting on said carriage 2 groove 4, an action on sensor 3 is exerted, transmitting signal to a decoding central unit (not shown), electronically transferring e.g. acceleration control.

Carriage 2 is provided with a return spring (not shown) bringing it back in the rest position when the digital pulp action is released.

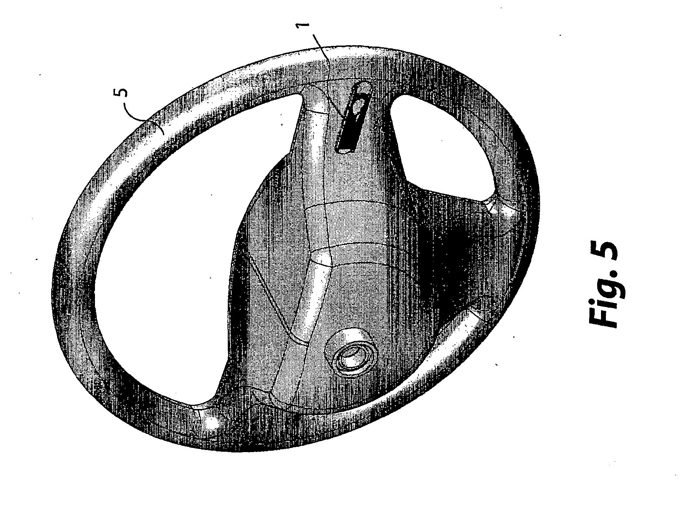

Solution shown in figures 1-5 has a rectilinear configuration, being it possible mounting it on any suitable surface of the steering wheel, even at the rear (as shown in figure 5). Obviously, it will be also possible providing a number of devices 1 according to the invention bigger than one.

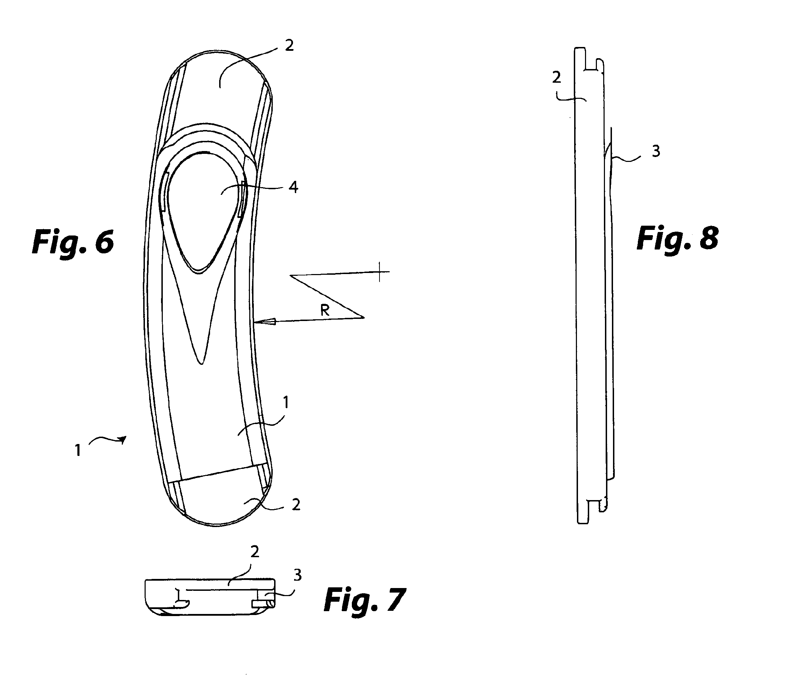

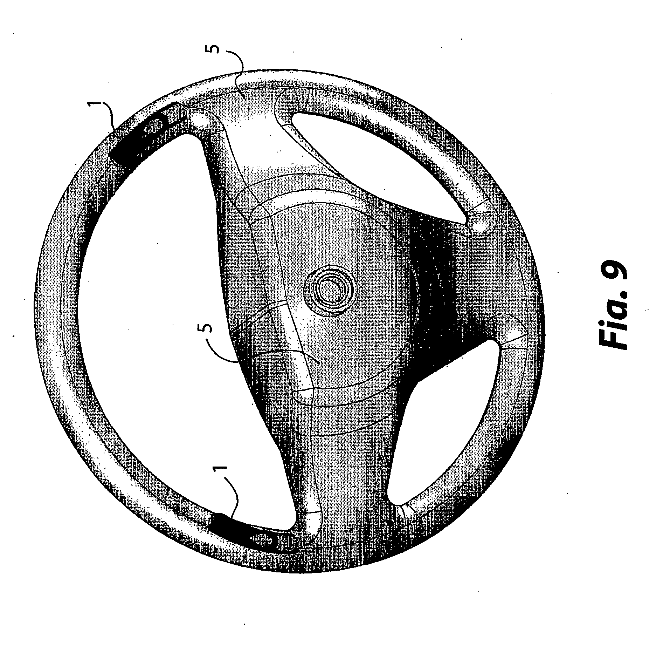

Coming now to observe figures 6 - 9 of the enclosed drawings, it is shown a second embodiment of the device according to the invention, and the same reference numbers will used to indicate the same elements.

Solution shown in figures 6 - 9 is structurally identical to the solution described in the above. Substantial difference consists in the device shape 1, in the present case a curvilinear shape, so as to be easily provided on the vehicle steering wheel.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Manual control device (1) for transmitting car driving controls, such as acceleration and braking control, comprising a sensor element (3) provided on the steering wheel, encoding means for signal received from said sensor element (3) and means for transferring the signal to the element to which control must be transmitted, said device (1) being **characterized in that** said sensor element (3) has a substantially elongated shape and **in that** a slidable element or carriage (2) is slidably provided on said sensor element (3), said slidable element or carriage (2) providing at least a groove (4) for positioning driver digital pulp in such a position to interact with said sensor element (3).

2. Manual control device for transmitting car driving controls according to claim 1, **characterised in that** said slidable element or carriage provides return means bringing it to the rest position.

3. Manual control device for transmitting car driving controls according to one of the preceding claims, **characterised in that** said return means are comprised of a spring.

4. Manual control device for transmitting car driving controls according to one of the preceding claims, **characterised in that** said device has a rectilinear shape.

5. Manual control device for transmitting car driving controls according to one of the preceding claims 1 - 3, **characterised in that** said device has a curvilinear shape.

6. Manual control device for transmitting car driving controls according to one of the preceding claims, **characterised in that** it is provided on the upper part and/or on the rear part of the steering wheel.

7. Manual control device for transmitting car driving controls according to one of the preceding claims, **characterised in that** it is provided a plurality of devices on the same steering wheel.

8. Manual control device for transmitting car driving controls according to one of the preceding claims, **characterised in that** said encoding means for the signal received from said sensor element are comprised of a central unit.

## Patentansprüche

1. Manuelles Steuergerät (1) zur Übertragung von Fahrzeugfahrsteuerungen, wie Beschleunigungs- und Bremssteuerungen, umfassend ein an dem Lenkrad vorgesehenes Sensorelement (3), ein Codiermittel für das von dem Sensorelement (3) empfangene Signal, und ein Mittel zum Übertragen des Signals zu dem Element, zu dem die Steuerung übertragen werden muss, wobei das Gerät (1) **dadurch gekennzeichnet ist, dass** das Sensorelement (3) eine im Wesentlichen langgestreckte Form aufweist und dass auf dem Sensorelement (3) ein verschiebbares Element oder ein Schlitten (2) verschiebbar vorgesehen ist, wobei das verschiebbare Element oder der Schlitten (2) mindestens eine Auskehlung (4) bereitstellt, um die fleischige Masse am Ende eines Fingers in einer solchen Position zu positionieren, um mit dem Sensorelement (3) zu interagieren.

2. Manuelles Steuergerät zur Übertragung von Fahrzeugfahrsteuerungen gemäß Anspruch 1, **dadurch gekennzeichnet, dass** das verschiebbare Element oder der Schlitten ein Rückführmittel vorsieht, das es in die Ausgangsposition zurückbringt.

3. Manuelles Steuergerät zur Übertragung von Fahrzeugfahrsteuerungen gemäß einem der vorangehenden Ansprüche, **dadurch gekennzeichnet, dass** das Rückführmittel aus einer Feder besteht.

4. Manuelles Steuergerät zur Übertragung von Fahrzeugfahrsteuerungen gemäß einem der vorangehenden Ansprüche, **dadurch gekennzeichnet, dass** das Gerät eine geradlinige Form hat.

5. Manuelles Steuergerät zur Übertragung von Fahrzeugfahrsteuerungen gemäß einem der vorangehenden Ansprüche 1 - 3, **dadurch gekennzeichnet, dass** das Gerät eine kurvenförmige Form hat.

6. Manuelles Steuergerät zur Übertragung von Fahrzeugfahrsteuerungen gemäß einem der vorangehenden Ansprüche, **dadurch gekennzeichnet, dass** es auf dem oberen Teil und/oder auf dem rückwärtigen Teil des Lenkrads vorgesehen ist.

7. Manuelles Steuergerät zur Übertragung von Fahrzeugfahrsteuerungen gemäß einem der vorangehenden Ansprüche, **dadurch gekennzeichnet, dass** eine Vielzahl von Geräten an demselben Lenkrad vorgesehen ist.

8. Manuelles Steuergerät zur Übertragung von Fahrzeugfahrsteuerungen gemäß einem der vorangehenden Ansprüche, **dadurch gekennzeichnet, dass** das Codiermittel für das von dem Sensorelement empfangene Signal aus einer Zentraleinheit besteht.

## Revendications

1. Dispositif de commande manuelle (1) pour transmettre des commandes de conduite de voiture, telles qu'une commande d'accélération et de freinage, comprenant un élément de capteur (3) prévu sur le volant de direction, des moyens de codage du signal reçu dudit élément de capteur (3) et des moyens pour transférer le signal à l'élément auquel la commande doit être transmise, ledit dispositif (1) étant **caractérisé en ce que** ledit élément de capteur (3) a une forme sensiblement allongée et **en ce qu'**un élément ou chariot coulissant (2) est monté à coulissement sur ledit élément de capteur (3), ledit élément ou chariot coulissant (2) fournissant au moins une rainure (4) pour positionner une pulpe digitale de conducteur dans une position telle à interagir avec ledit élément de capteur (3).

2. Dispositif de commande manuelle pour transmettre des commandes de conduite de voiture selon la revendication 1, **caractérisé en ce que** ledit élément ou chariot coulissant fournit des moyens de retour le conduisant à la position de repos.

3. Dispositif de commande manuelle pour transmettre des commandes de conduite de voiture selon l'une quelconque des revendications précédentes, **caractérisé en ce que** lesdits moyens de retour sont composés d'un ressort.

4. Dispositif de commande manuelle pour transmettre des commandes de conduite de voiture selon l'une quelconque des revendications précédentes, **caractérisé en ce que** ledit dispositif a une forme rectiligne.

5. Dispositif de commande manuelle pour transmettre des commandes de conduite de voiture selon l'une quelconque des revendications précédentes 1 à 3, **caractérisé en ce que** ledit dispositif a une forme curviligne.

6. Dispositif de commande manuelle pour transmettre des commandes de conduite de voiture selon l'une quelconque des revendications précédentes, **caractérisé en ce qu'**il est prévu sur la partie supérieure et/ou la partie arrière du volant de direction.

7. Dispositif de commande manuelle pour transmette des commandes de conduite de voiture selon l'une quelconque des revendications précédentes, **caractérisé en ce qu'**il est prévu une pluralité de dispositifs sur le même volant de direction.

8. Dispositif de commande manuelle pour transmettre des commandes de conduite de voiture selon l'une quelconque des revendications précédentes, **caractérisé en ce que** lesdits moyens de codage du signal reçu dudit élément de capteur sont composés d'une unité centrale.
